# DEMANDE DE BREVET EUROPEEN

(11) **EP 3 173 702 A1**
(43) Date de publication de la demande: **31.05.2017**
(21) Numéro de dépôt: 16198649.2
(22) Date de dépôt: 14.11.2016
(51) Int. Cl.: F24D 5/00, F24D 11/00, F24F 5/00, F24J 2/00, F28D 20/02

(54) **PROCÉDÉ D'EXPLOITATION D'UNE INSTALLATION DE PANNEAUX PHOTOVOLTAÏQUES ET INSTALLATION DE PANNEAUX PHOTOVOLTAÏQUES**

(30) Priorité: 19.11.2015 FR 1561113; 19.11.2015 FR 1561114
(71) Demandeur: Systovi, 44800 Saint-Herblain (FR)
(72) Inventeur: Janot, Pascal, 44000 Nantes (FR); Benabdelkarim, Mohamed, 44000 Nantes (FR)
(74) Mandataire: Tournel, Jean Louis

(57) **Abrégé**

L'invention a pour objet une installation comprenant :
- des panneaux (2) photovoltaïques produisant du courant électrique et de la chaleur,
-des moyens (30) de distribution de l'air chauffé par les panneaux photovoltaïques et
- des moyens (4,5) pour stocker de l'énergie produite par les panneaux photovoltaïques, cette installation étant caractérisée en ce qu'elle comprend :
- des premiers moyens (4) de stockage de la chaleur alimentés exclusivement par un flux d'air provenant des panneaux photovoltaïques et
-des seconds moyens (5) de stockage d'énergie électrique sous forme thermique distinct des premiers moyens opérant à une température différente des premiers moyens de stockage, ces seconds moyens de stockage comprenant un équipement électrique pour transformer le courant électrique produit par les panneaux photovoltaïques en énergie thermique.

## Description

L'invention se rapporte à un procédé d'exploitation d'une installation de production d'électricité avec stockage d'énergie pour climatiser un local.

Elle se rapporte également à l'installation.

Les autorités ont incités les particuliers à s'équiper de panneaux photovoltaïques en achetant à ces particuliers le courant électrique produit par les panneaux bien plus cher qu'il ne vendait leur courant provenant des centrales ou barrages. Le différentiel de cout était important et de plus il existait des subventions pour s'équiper. Les possesseurs de ces installations vendaient tout le courant produit et utilisaient du courant acheté moins cher.

Depuis, l'énergie achetée par un particulier aux grands fournisseurs a vu son cout régulièrement augmenté sans excès. Par contre la revente du courant électrique produit par les particuliers grâce aux panneaux photovoltaïques a vu son prix chuter d'où l'intérêt de consommer une part plus importante de l'énergie produite par son installation.

Les panneaux photovoltaïques produisent du courant essentiellement le jour alors que nous sommes absents de nos habitations.

La consommation de l'énergie dans une habitation se partage entre le chauffage de l'habitation et de la nourriture puis ensuite l'éclairage. L'hiver c'est le poste chauffage de l'habitation qui est le plus grand consommateur par contre l'été il y aurait un besoin en froid. L'électricité produite par les panneaux photovoltaïques peut être utilisée lorsque l'on dispose de radiateurs électriques amis si on utilise un chauffage gaz ce n'est pas possible.

A priori les panneaux photovoltaïques ont pour fonction unique de produire du courant cependant certains panneaux photovoltaïques sont équipés de moyens en vue de les refroidir par balayage avec un flux d'air qui, ainsi réchauffé, va être collecté et injecté dans l'habitation ou alimenter une pompe à chaleur d'un ballon à eau chaude sanitaire.

On constate que la production d'électricité se fait sur une période allant de 8h le matin à 20 h le soir avec un pic autour de 13h-14h (luminosité maximale). Il en est de même avec l'air chauffé par les panneaux photovoltaïques ou des panneaux solaires thermiques. La production d'air chaud peut être importante.

Si on regarde la consommation électrique elle est souvent réduite en journée car les occupants sont au travail et il n'est pas nécessaire de se servir de l'éclairage.

Il en est de même pour l'utilisation de l'air chaud. Mais le soir et la nuit, on ne produit plus d'électricité et la chaleur est réduite.

Pour la production du courant électrique, lorsqu'on ne l'utilise pas il est souvent vendu par contre pour la chaleur, lorsqu'on ne l'utilise pas, elle est rejetée à l'atmosphère.

Pour stocker l'énergie électrique, il existe des batteries de stockage de l'électricité basées sur des réactions chimiques mais ces batteries sont encombrantes (batterie au plomb) ou elles sont couteuses ( batterie lithium-ion).Elles sont limitées par le nombre de charge et décharges. Elles sont couteuses. Il est donc peu intéressant, à ce jour, de stocker de l'énergie dans des batteries électriques.

En supplément, le courant doit être stocké puis déstocké pour ensuite être transformé en courant alternatif pour être utilisé ce qui engendre des pertes importantes de l'ordre de 40 %.

La part d'énergie liée au chauffage des habitations est de l'ordre de 70% de l'énergie consommée.

Certes avec les habitations à basse consommation ou à énergie positive le rapport est différent mais le nombre de ces habitations est faible.

On connait WO 2004/070281 une installation solaire destinée à capter de l'air chauffé pour la distribuer dans des pièces de l'habitation ou pour chauffer une réserve d'eau. Il est également prévu de charger une batterie thermique à matériau à changement de phase avec le flux d'air chauffé. De l'air chaud produit par un bruleur à bois ou à fuel ou par un radiateur électrique utilise les mêmes conduites de distribution de l'air chaud produit par les capteurs d'air chaud

Il est donc connu d'utiliser cet air chaud pour alimenter des batteries thermiques par exemple du type à matériau à changement de phase.

Avec ces matériaux à changement de phase on bénéficie du principe de la chaleur latente lié aux changements d'état.

Selon cette solution, on fait passer au travers de cette batterie de l'air plus chaud que la température de changement de phase pour accumuler des calories dans cette batterie.

La nuit, pour récupérer les calories on fait passer sur cette batterie de l'air froid qui se réchauffe afin de venir chauffer les pièces de l'habitation. Les matériaux à changement de phases vont céder leurs calories .Ils sont choisis pour travailler avec un changement de phases pour une température, par exemple, de l'ordre de 23 à 25°Celsius qui sont des températures atteignables l'hiver mais il n'est pas possible de travailler avec des matériaux à changement de phase ayant une température de fusion de 35° à 38° car l'air chaud réchauffé par les panneaux n'atteint pas cette température l'hiver.

Il apparait que si on souhaite récupérer plus de calories , il faut que les matériaux qui servent à emmagasiner la chaleur travaille à des températures élevées cependant, il faut que l'air chauffé qui va charger ces matériaux atteigne une température élevée ce qui limite les possibilités et les plages horaires où la température désirée est atteinte.

Il est connu de stocker de la chaleur US 4. 471. 834 dans des modules qui peuvent être accouplés.

Il est connu US 4 248 291 une batterie à matériau à changement de phases équipée en supplément d'une résistance électrique qui apporte un complément de chaleur lorsque la température de l'air est insuffisante.

L'été on produit plus de courant et de chaleur mais le besoin en chaleur est remplacé par un besoin en air froid pour refroidir les pièces de l'habitation et il faut alors faire appel à des climatiseurs qui pourraient fonctionner avec le courant produit par les panneaux photovoltaïques.

L'invention propose une solution pour améliorer le confort des habitants d'une maison équipée d'une installation à panneau photovoltaïques et utiliser plus d'énergie électrique produite par l'installation.

A cet effet, l'invention a pour objet un procédé d'exploitation d'une installation de panneaux photovoltaïques produisant du courant électrique et chauffant de l'air utilisé pour refroidir les dits panneaux cet air chauffé étant distribué dans les différentes pièces d'une maison et utilisé pour accumuler des calories dans un premier moyen de stockage d'énergie contenant un matériau de stockage ce procédé d'exploitation étant caractérisé en ce qu'on stocke une partie de l'électricité produite par les panneaux sous forme de calories et/ou de frigories dans des seconds moyens de stockage contenant des matériaux à changement de phase, ces seconds moyens de stockage étant indépendants des premiers moyens de stockage.

L'invention sera bien comprise à l'aide de la description ci-après faite à titre d'exemple non limitatif en regard du dessin qui représente :

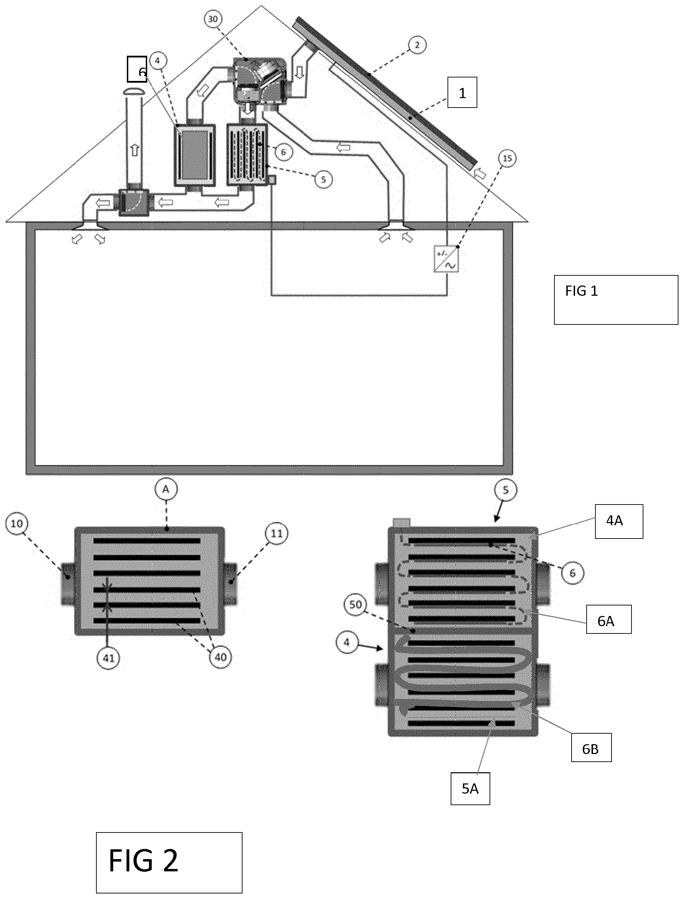

FIG 1 ; une installation selon l'invention
FIG 2 : élément de stockage avec matériaux à changement de phase
FIG 3 un autre élément de stockage

En se reportant au dessin, on voit une installation 1 de production d'énergie installée dans une habitation.

Cette installation produit de l'électricité et pour ce faire elle comprend des panneaux 2 photovoltaïques posés par exemple en toiture. Des moyens 15 de conversion du courant continu en courant alternatif permettent soit d'utiliser le courant directement dans l'habitation soit l'injecter sur le réseau.

L'installation comprend également des moyens 30 de distribution de l'air qui ayant servi à refroidir les panneaux photovoltaïques a capté des calories pour être distribué dans les différentes pièces de l'habitation et/ou venir alimenter un échangeur couplé à un ballon d'eau chaude.

Il est fait appel à une turbine pour aspirer l'air au travers des panneaux photovoltaïques et le distribuer via un caisson où un mélange d'air chaud avec de l'air froid peut être réalisé. Des volets dans le caisson ajustent le mélange et la distribution.

Des moyens 4,5 pour stocker de l'énergie produite équipent également cette installation. On utilise des premiers moyens 4 de stockage d'énergie qui sont chargés uniquement par de l'air chauffé par les panneaux photovoltaïques balayant les matériaux de stockage contenus dans les moyens 4 de stockage qui sont, par exemple, agencés sous forme de plaques disposées parallèlement les unes à côté des autres pour permettre à l'air chaud de circuler.

L'installation comprend également des moyens 5 de stockage du type à matériaux à changement de phase qui, au lieu d'être alimenté en air chaud, comprennent un équipement électrique alimenté en courant pour charger les dits moyens de stockage. L'équipement électrique est constitué par un moyen 6A de production de chaleur et/ou par un moyen 6B de production de froid, les dits moyens 6A, 6B étant accolés aux matériaux à changement de phases se présentant sous forme de plaques.

Les moyens 6A de production de chaleur sont, par exemple, des résistances électriques. La charge en calories de ces moyen 5 de stockage est réalisée exclusivement par des équipements électriques utilisant du courant notamment produit par les panneaux photovoltaïques.

Ces équipements électriques de transformation du courant en calories ou en frigories sont accolés aux plaques de matériaux.

Un avantage c'est que le courant alimentant les résistances électriques et provenant des panneaux 2 n'a pas besoin d'être transformé en courant alternatif mais rien n'empêche cette transformation.

Les moyens 6B de production du froid sont, par exemple, un module à effet Peltier ou un compresseur/évaporateur.

Dans une forme de réalisation, les seconds moyens 5 de stockage comprennent un premier type de matériaux à changement de phases avec une température de fusion adaptée au moyen 6A de production de chaleur à partir du courant électrique et un second type de matériaux à changement de phases avec une température de fusion adaptée au moyen 6B de production de froid à partir du courant électrique qui servira à refroidir l'air.

Les matériaux des seconds moyens sont logés dans des caissons isolants indépendants ou dans un caisson commun mais avec une séparation isolant le bloc contenant un type de matériau d'un autre bloc contenant le second matériau qui travaille chacun à des températures différentes

Selon la période de l'année ou du besoin on utilise l'un ou l'autre des moyens 5 de stockage.

Le chargement par courant électrique permet de s'affranchir des températures de l'air disponible.

Pour refroidir un local il ne faut pas nécessairement être en dessous de zéro degré Celsius. Par exemple une température de 18° sera largement suffisante pour refroidir de l'air à 28°C.

Pour réchauffer, il en est de même, une mise en température de 24 degrés Celsius est suffisante pour chauffer de l'air à 16 degrés dans le but d'atteindre 18° à 20°C dans la pièce.

Ainsi, l'installation comprend des premiers moyens 4 de stockage utilisant exclusivement de l'air chaud pour accumuler de l'énergie et des seconds moyens 5 de stockage du type à matériaux à changement de phases accumulant des calories produites par un équipement électrique 6A tel une résistance électrique et/ou un module 6B à effet Peltier alimenté en courant continu produit par les moyens 2 de production de courant électrique pour refroidir l'air avant introduction dans l'habitation par contact de l'air à refroidir sur les moyens de stockage. Ces seconds moyens de stockage sont essentiellement chargés par des équipements électriques consommant le courant produit par les panneaux photovoltaïques.

Bien évidemment ces seconds moyens seront balayés par un courant d'air qu'il faut réchauffer ou refroidir cela pendant la période de restitution de l'énergie emmagasinée.

Ainsi, on va charger les moyens de stockage soit en calories soit en frigories à l'aide du courant produit par l'installation ce qui va permettre ensuite, par exemple de refroidir l'air pendant la période la plus chaude de la journée, les frigories ayant été stockées à une autre période. Cette charge ou décharge peut ainsi se faire indépendamment de la température de l'air.

Le module à effet Peltier comporte deux faces opposées l'une produisant du froid et l'autre du chaud. On fixe la face du module à effet Peltier produisant du froid sur l'un des faces de la plaque de matériau à changement de phase en sorte de refroidir la plaque. Un courant d'air circule pour extraire l'air chaud produit incidemment par le dispositif à effet Peltier lors de la production de frigories.

Le courant électrique provient des moyens de production tels les panneaux photovoltaïques ou une éolienne mais on pourrait également utiliser le courant acheté à un distributeur.

Les matériaux à changement de phase sont agencés en forme de plaques 40 avec des moyens aptes à perturber l'écoulement pour un meilleur transfert entre l'air et les surfaces de plaques pour augmenter l'échange thermique.

L'été, on a besoin de rafraichir la maison avec de l'air froid, il est donc possible en utilisant l'effet Peltier d'emmagasiner des frigories dans un moyen de stockage pour les utiliser ensuite pour refroidir de l'air qui sera ensuite distribué dans les pièces de l'habitation.

Un avantage d'un module à effet Peltier est que l'alimentation électrique est du continu ce qui ne nécessite pas de transformer le courant produit par les panneaux en courant alternatif.

Au lieu d'un module à effet Peltier , on peut utiliser un compresseur/évaporateur.

L'intérêt de l'usage du courant électrique pour agir sur les matériaux à changement de phase est que le stockage n'est pas tributaire des températures de l'air qu'il est possible d'obtenir. Il dépend de la disponibilité du courant produit. On peut ainsi stocker de la chaleur dans les premiers moyens 4 de stockage avec l'air chauffé et en même temps produire des frigories avec le courant électrique produit et les stocker dans un second moyen 5 de stockage.

Les matériaux du moyen de stockage sont logés dans un caisson isolant A comportant une entrée 10 et une sortie 11.

Un pilote peut ainsi gérer les différents flux d'air en fonction des températures, des besoins électriques immédiats, de la production du courant et des quantités de calories ou frigories disponibles ou à emmagasiner.

Le moyen de stockage est réalisé par des plaques 40 de matériau à changement de phases placées dans une enveloppe conductrice de la chaleur ou du froid disposées parallèlement entre elles avec un espace 41 entre les plaques pour la circulation d'air. L'air à chauffer ou chauffant circule entre les plaques où se produit un échange thermique. Un caisson isolant loge chaque groupe de plaques 40.

Les deux moyens de stockage (chaud /froid) peuvent être logés dans un seul caisson mais ils seront séparés par une cloison isolante 50 et des volets permettent de sélectionner les entrées et sorties de l'air circulant dans le moyen de stockage.

On utilise un module 30 de gestion des flux d'air avec possibilité de mélange logeant une turbine ou un ventilateur. Ce module est disposé dans les combles.

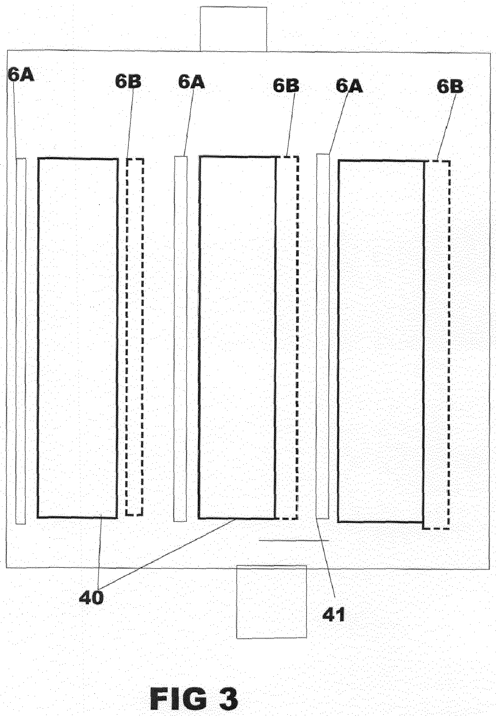

Dans une autre forme de réalisation figure 3, on utilise un seul type de matériau à changement de phase avec, par exemple, une température de fusion de l'ordre de 22 à 23° et l'une des faces de la plaque en matériau à changement de phase est refroidie par un moyen 6B de production de froid, l'autre face de la plaque est chauffée avec un moyen 6A de production de chaleur. Quand l'un des moyens de production 6A,6B fonctionne l'autre ne fonctionne pas.

Cette température moyenne permet l'hiver de réchauffer l'air qui par exemple serait à 16°C et l'été de refroidir de l'air qui serait à 27° C.

Les premiers moyens 4 de stockage peuvent contenir des matériaux à changement de phases.

L'installation peut bien entendu comprendre des moyens de stockage de l'électricité de type batteries électro-chimiques.

Les différents moyens 4,5 de stockage travaillent à des températures différentes. Chaque moyen de stockage est bien entendu dimensionné en fonction du besoin.

On peut ainsi augmenter sa consommation d'électricité produite notamment l'hiver où les besoins en chauffage sont très importants et l'air chauffé moins chaud. Cela est encore plus flagrant pour les maisons ayant des défauts d'isolement où la quantité d'énergie est importante ( l'apport en chaleur par l'air chauffé peut être insuffisant et une partie de l'énergie électrique est alors convertie en calories stockées par les deuxièmes moyens de stockage pour être restituée plus tard.

On met en oeuvre un procédé d'exploitation d'une installation de panneaux 2 photovoltaïques produisant du courant électrique et chauffant de l'air utilisé pour refroidir les dits panneaux cet air chauffé étant distribué dans les différentes pièces d'une maison et utilisé pour accumuler des calories dans un premier moyen 4 de stockage d'énergie contenant un matériau de stockage ce procédé d'exploitation étant caractérisé en ce qu'on stocke une partie de l'électricité produite par les panneaux sous forme de calories et/ou de frigories dans des seconds moyens 5 de stockage contenant des matériaux à changement de phase indépendant des premiers moyens de stockage pour être utilisable dans une plage de températures différente du premier moyen de stockage.

Les matériaux à changement de phases sont choisis pour avoir une température de changement de phases différente de la température moyenne des premiers moyens de stockage. On peut avoir différents moyens de stockage chacun travaillant dans une plage de températures.

Avantageusement, on utilise directement le courant continu produit par les panneaux photovoltaïques pour alimenter des équipements électriques transformant le courant électrique en calories et/ou en frigories pour charger les matériaux à changement de phases. De préférence, on utilise le courant continu pour alimenter les équipements électriques accolés aux plaques sans passer par une transformation dudit courant continu en courant alternatif.

On peut par mesure calculer l'énergie consommée les jours précédents en fonction des températures extérieures et calculer le besoin dans le temps de l'énergie nécessaire en fonction des prévisions de température pour mettre en oeuvre un processus de stockage et d'exploitation du courant devant être produit et aussi déterminer une estimation du courant à vendre, cette estimation servant à l'acquéreur du courant pour programmer la production.

L'installation comprend des moyens pour estimer une consommation prévisionnelle en fonction de l'historique des consommations et des températures extérieures relevées et prévues et des moyens pour informer le propriétaire et/ou un tiers de la quantité de courant excédentaire qui sera disponible pour la revente afin d'optimiser la production électrique.

## Revendications

1. Procédé d'exploitation d'une installation de panneaux (2) photovoltaïques produisant du courant électrique et chauffant de l'air utilisé pour refroidir les dits panneaux cet air chauffé étant distribué dans les différentes pièces d'une maison et utilisé pour accumuler des calories dans un premier moyen (4) de stockage d'énergie contenant un matériau de stockage ce procédé d'exploitation étant **caractérisé en ce qu'**on stocke une partie de l'électricité produite par les panneaux sous forme de calories et/ou de frigories dans des seconds (5) moyens de stockage contenant des matériaux à changement de phase indépendants des premiers moyens (4) de stockage pour être utilisable dans un intervalle de température différent du premier moyen de stockage.

2. Installation comprenant :
- des panneaux (2) photovoltaïques produisant du courant électrique et de la chaleur,
- des moyens (30) de distribution de l'air chauffé par les panneaux photovoltaïques et
- des moyens (4,5) pour stocker de l'énergie produite par les panneaux photovoltaïques, cette installation étant **caractérisée en ce qu'**elle comprend :
- des premiers moyens (4) de stockage de la chaleur alimentés exclusivement par un flux d'air provenant des panneaux photovoltaïques et
- des seconds moyens (5) de stockage d'énergie électrique sous forme thermique distincts des premiers moyens (4) opérant à une température différente des premiers moyens de stockage, ces seconds moyens de stockage comprenant un équipement électrique pour transformer le courant électrique produit par les panneaux photovoltaïques en énergie thermique.

3. Installation selon la revendication 2 **caractérisée en ce que**, les seconds moyens (5) de stockage comprennent un premier type de matériaux à changement de phase avec une température de fusion adaptée au moyen (6A) de production de chaleur à partir du courant électrique et un second type de matériaux à changement de phases avec une température de fusion adaptée au moyen (6B) de production de froid à partir du courant électrique qui servira à refroidir l'air.

4. Installation selon la revendication 2 **caractérisée en ce que** moyen (5) de stockage de l'énergie produite par le courant électrique est réalisé par des plaques (40) de matériau à changement de phases placées dans une enveloppe conductrice de la chaleur ou du froid disposées parallèlement entre elles avec un espace (41) entre les plaques pour la circulation d'air , l'ensemble des plaques étant logées dans un caisson isolant.

5. Installation selon la revendication 4 **caractérisée en ce que** les équipements 6A,6B électriques de transformation du courant sont accolés aux plaques (40) de matériau à changement de phase.

6. Installation selon la revendication 2 **caractérisée en ce que** les différents moyens de stockage travaillent à des températures différentes.

7. Installation selon la revendication 2 **caractérisé en ce que** l'installation comprend des moyens pour estimer une consommation prévisionnelle en fonction de l'historique des consommations et des températures extérieures relevées et prévues et des moyens pour informer le propriétaire et/ou un tiers de la quantité de courant excédentaire qui sera disponible pour la revente afin d'optimiser la production électrique.
